# EUROPÄISCHE PATENTSCHRIFT

(11) **EP 2 169 185 B1**
(45) Veröffentlichungstag und Bekanntmachung des Hinweises auf die Patenterteilung: **30.05.2012**
(21) Anmeldenummer: 08016914.7
(22) Anmeldetag: 25.09.2008
(51) Int. Cl.: F01D 25/12, F01D 1/00

(54) **Dampfturbine**
Steam turbine
Turbine à vapeur

(43) Veröffentlichungstag der Anmeldung: 31.03.2010
(73) Patentinhaber: Siemens Aktiengesellschaft, 80333 München (DE)
(72) Erfinder: Kühn, Helmut, 02894 Mengelsdorf (DE)

(56) Entgegenhaltungen:
- EP-A- 0 287 440
- EP-A- 1 391 586
- DE-A1- 4 444 587
- US-A- 5 104 284

## Beschreibung

Die vorliegende Erfindung betrifft eine Dampfturbine mit mindestens einem Magnetlager für die Welle, wobei im Bereich eines Magnetlagers eine Beblechung aufgebracht ist.

Aus der DE 44 44 587 A1 ist eine Turbine mit einer magnetisch gelagerten Welle, deren jedes Lager ein erstes mit der Welle verbundenes Lagerteil und ein zweites ortsfestes Lagerteil umfasst. Eines der beiden Lagerteile umfasst ein permanentmagnetisches Element und das andere Lagerteil umfasst ein supraleitendes Material.

Ein Magnetlager stellt eine zu den bislang benutzten Lagerungsverfahren alternative Möglichkeit dar. Die herausragende Eigenschaft des Magnetlagers ist die Berührungsfreiheit zwischen gelagertem Teil und Lager. Die benötigten Lagerkräfte werden durch ein geeignetes magnetisches Feld erzeugt, das zwischen dem feststehenden Teil und dem zu lagernden Teil aufgebaut wird. Damit ist ein Magnetlager verschleißfrei und benötigt keinerlei Schmiermittel.

Wird ein Magnetlager zur Lagerung der Welle einer Dampfturbine verwendet, dann sind die auftretenden hohen Temperaturen während des Betriebs der Dampfturbine für das Magnetlager problematisch.

Im Bereich des Magnetlagers ist auf der Welle eine Beblechung aufgebracht zur Minimierung der Wirbelstromverluste im Lager. Diese Beblechung besteht üblicherweise aus einer Anzahl von Blechringen, die durch eine geeignete Beschichtung elektrisch voneinander isoliert sind. Die hohen Temperaturen in der Welle einer Dampfturbine können zum Aufschmelzen der Beschichtung und damit zur Zerstörung der Beblechung führen.

Aufgabe der vorliegenden Erfindung ist es daher eine Dampfturbine mit mindestens einem Magnetlager für die Welle anzugeben, bei welcher eine Überhitzung des Magnetlagers und damit eine Zerstörung der Beblechung verhindert wird.

Diese Aufgabe wird für die eingangs genannte Dampfturbine dadurch gelöst, dass im Bereich der Magnetlager in Längsrichtung der Welle verlaufende Luftkanäle für eine zuzuführende Kühlluft ausgebildet sind, wobei die Luftkanäle auf der der Beschaufelung zugewandeten Seite des Magnetlagers mit einer radial verlaufende Kühlluft-Zuführungen aufweisenden Kühlluft-Zuführungseinrichtung verbunden sind und am freien Ende des Wellenendes im Lagergehäuse enden.

Durch die gezielte Kühlung des Magnetlagers, speziell eines am heißen Ende der Dampfturbine angeordneten Magnetlagers, wird eine Überhitzung der Isolationsschichten der Beblechung und damit eine Zerstörung des Magnetlagers verhindert.

Weitere zweckmäßige Ausgestaltungen der erfindungsgemäßen Dampfturbine ergeben sich aus den Unteransprüchen so wie aus der nachfolgenden Beschreibung verschiedener Ausführungsbeispiele einer Dampfturbine gemäß der vorliegenden Erfindung anhand der beigefügten Zeichnung.

Es zeigen
Figur 1 einen teilweisen Längsschnitt durch eine Dampfturbine gemäß der vorliegenden Erfindung,
Figur 2 die Detailansicht D aus Figur 1,
Figur 3 einen teilweisen Längsschnitt durch ein Magnetlager an einem Wellenende mit den gemäß der Erfindung vorgesehenen Kühlluftkanälen, und
Figur 4 eine teilweise geschnittene perspektivische Ansicht eines Wellenendes mit gemäß der Erfindung vorgesehenen Kühlluftkanälen.
Figur 5 eine teilweise geschnittene perspektivische Ansicht eines Wellenendes mit weiteren gemäß der Erfindung vorgesehenen Kühlluftkanälen.

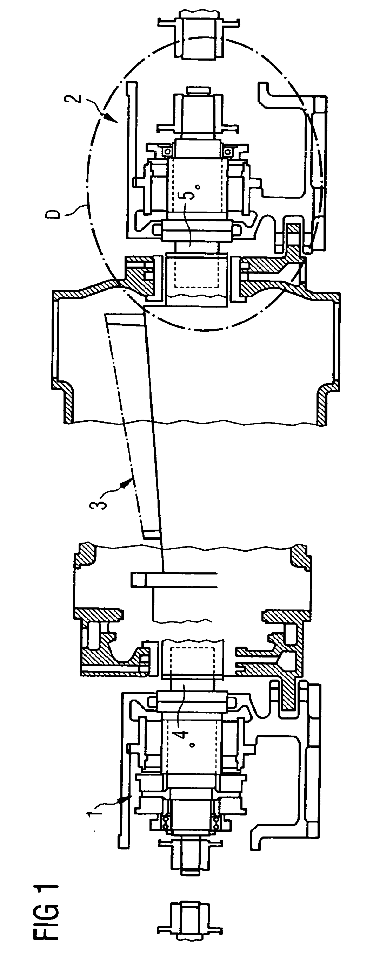

Figur 1 zeigt nur die zum Verständnis der Erfindung notwendigen Baugruppen einer erfindungsgemäßen Dampfturbine. Die Dampfturbine besteht im Wesentlichen aus dem vorderen Lagergehäuse 1, dem hinteren Lagegehäuse 2, welches sich an dem heißen Ende der Dampfturbine befindet, und dem mittleren Bereich 3 mit der Beschaufelung.

Gelagert ist die Welle der Dampfturbine im vorderen Lagergehäuse 1 mit einem vorderen aufgeschraubten Wellenende 4 und im hinteren Lagergehäuse 2 mit einem hinteren aufgeschraubten Wellenende 5.

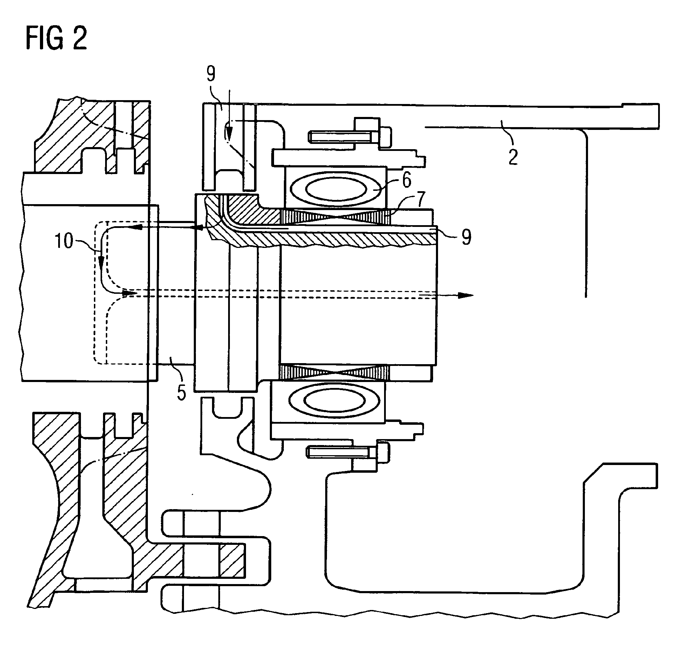

Figur 2 zeigt den Ausschnitt D der Figur 1, d.h. Figur 2 zeigt detailliert das hintere Lagergehäuse 2. Im hinteren Lagergehäuse 2 befindet sich das Magnetlager 6 mit der Beblechung 7. Unterhalb der Lamination sind Kühlluftkanäle 9 angeordnet. Die Kühlluft wird diesen Kühlluftkanälen 9, welche in einer helikalen Struktur unterhalb des Magnetlagers 6 angeordnet sind, über eine Kühlluftzuführung 8 zugeführt. Die einzelnen Kühlluftkanäle 9 enden am freien Ende des Wellenendes im hinteren Lagergehäuse 2.

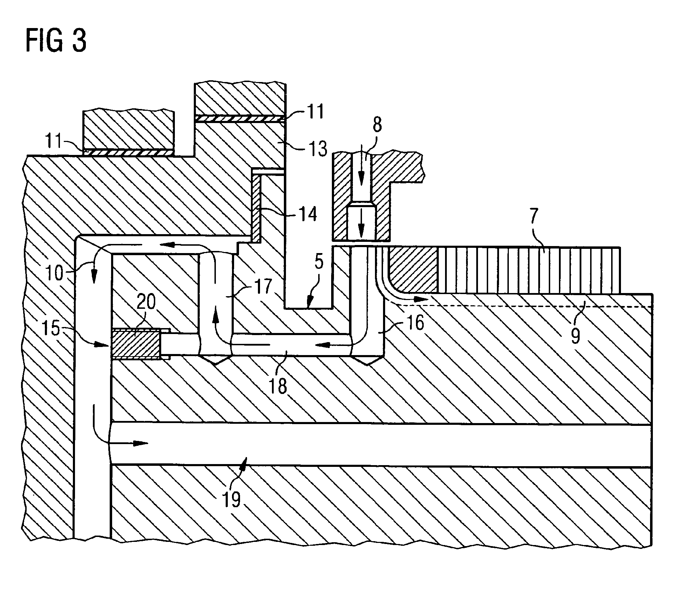

Figur 3 zeigt einen teilweisen Längsschnitt durch das hintere Lagergehäuse 2 mit dem hinteren angeschraubten Wellenende 5. Diese Figur zeigt zwei Kühlluft-Führungen. Einmal die Kühlluftführung durch die Kühlluftkanäle 9, welche unter der Beblechung 7 angeordnet sind und am freien Ende des hinteren angeschraubten Wellenendes 5 enden.

Gleichzeitig gibt es nach einer Weiterbildung der vorliegenden Erfindung eine weitere Kühlluft-Führung, welche zu der eigentlichen Welle 13 geführt ist und von dort durch eine mittige axiale Bohrung in das hintere Lagergehäuse 2 zurückgeführt ist. Diese Kühlluft-Führung soll nachfolgend näher beschrieben werden. Die genaue Befestigung des Wellenendes 5 an der Welle 13 soll hier nicht näher beschrieben werden. Es ist in der Figur lediglich eine Isolierlagergehäuseschreibe 14 zwischen der eigentlichen Welle 13 und dem angeschraubten Wellenende 5 dargestellt. Diese Isolierschreibe 14 dient zur Unterbrechung des Wärmeflusses von der Welle 13 auf das hinten angeschraubte Wellenende 5.

Die Kühlluftzuführung 8 versorgt sowohl die Kühlluftkanäle 9 als auch die Kühlluftführung 10 in Richtung auf die Welle 13. Dazu sind im Bereich der ringförmig ausgestalteten Kühlluftzuführung 8 in vorgegebenen Abständen radiale Sackbohrungen 16 vorgesehen. Ausgehend von dem der eigentlichen Welle 13 gegenüberliegenden Ende des hinteren angeschraubten Wellenendes 5 sind in der Peripherie des Wellenendes 5 mehrere axiale Bohrungen 18 vorgesehen, welche auf die radiale Sackbohrung 16 treffen. In der Nähe des der eigentlichen Welle benachbarten Endes des angeschraubten Wellenendes 5 sind weitere radiale Sackbohrungen 17 vorgesehen, welche auf die peripheren axialen Bohrungen 18 treffen.

Die axialen Bohrungen 18 sind an ihrem Anfang jeweils mit einem Verschlussstück 20 verschlossen. Weiterhin existiert eine mittige axiale Bohrung 19, welche durch das gesamte angeschraubte Wellenende 5 führt. Auf diese Weise ergibt sich eine weitere Kühlluftführung, welche ausgehend von der Kühlluftzuführung 8 durch die radialen Sackbohrungen 16, die peripheren axialen Bohrungen 18, die radialen Sackbohrungen 17, durch einen Freiraum zwischen einem Teil der peripheren Oberfläche des angeschraubten Wellenendes 5 und einem Teil einer inneren peripheren Oberfläche der Welle 13, einer Kammer 15 zwischen Welle 13 und angeschraubtem Wellenende 5 und durch die mittige axiale Bohrung 19 führt.

Dadurch wird der Wärmeübergang von der Welle 13 auf das hintere angeschraubte Wellenende 5 mit dem Magnetlager erheblich verringert.

Es sind hier die Kühlluftführungen für das hintere angeschraubte Wellenende beschrieben. Selbstverständlich sind identischen Kühlluftführungen für das vordere angeschraubte Wellenende möglich.

Auch kann bei beiden Wellenenden, wenn es die Umstände erlauben, auf die zweite Kühlluftführung verzichtet werden.

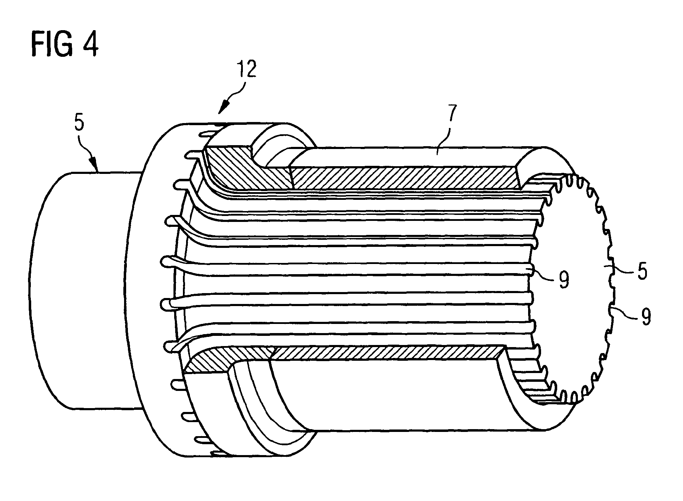

Figur 4 zeigt eine teilweise geschnittene perspektivische Ansicht eines Wellenendes mit gemäß der Erfindung vorgesehenen Kühlluftkanälen 9. Die Kühlluftkanäle 9 werden mittels eines Rings 12, welcher aus 2 Teilen besteht radial nach außen hin geleitet, um mittels der Kühlluftzuführung 8 mit Kühlluft beaufschlagt zu werden. Die Kühlluftkanäle 9 werden durch entsprechende Nuten im Wellenende sowie durch die Beblechung 7 des Magnetlagers gebildet.

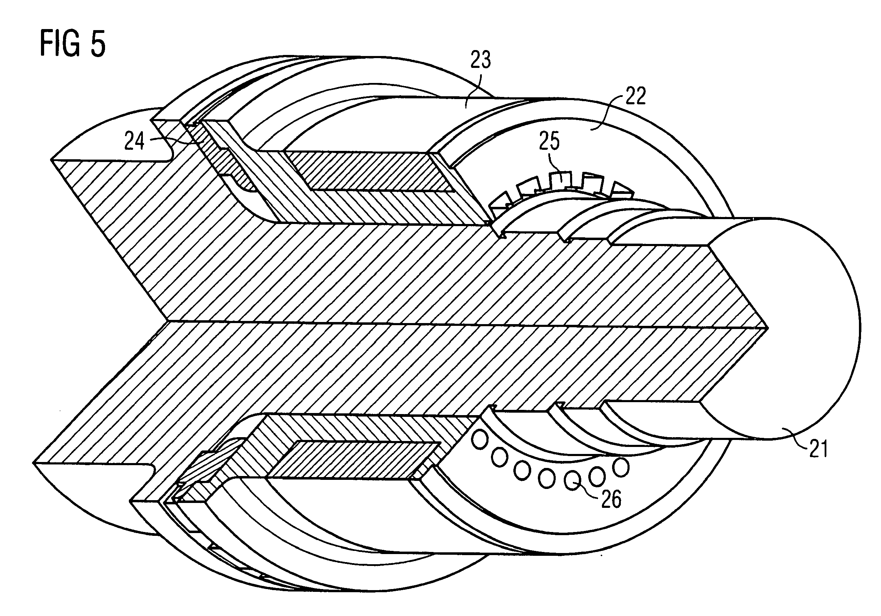

Figur 5 zeigt eine teilweise geschnittene perspektivische Ansicht eines Wellenendes mit weiteren gemäß der Erfindung vorgesehenen Kühlluftkanälen 25 und 26. Diese Luftkanäle werden entweder von Nuten 25 auf der Innenseite der die Beblechung 23 tragenden Buchse 22 oder von axialen Bohrungen 26 in der Buchse 22 gebildet. Die Kühlluftkanäle werden mittels eines Rings 24 radial nach außen geleitet.

### Bezugszeichenliste

- 1: vorderes Lagergehäuse
- 2: hinteres Lagergehäuse
- 3: mittlerer Wellenbereich mit Beschaufelung
- 4: vorderes angeschraubtes Wellenende
- 5: hinteres angeschraubtes Wellenende
- 6: Magnetlager
- 7: Beblechung
- 8: Kühlluftzuführung
- 9: Kühlluftkanal
- 10: Kühlluftführung im angeschraubten Wellenende
- 11: Wellendichtung
- 12: Ring
- 13: Welle
- 14: Isolierscheibe
- 15: Kammer
- 16: radiale Bohrung
- 17: radiale Bohrung
- 18: periphere axiale Bohrung
- 19: mittige axiale Bohrung
- 20: Verschluss
- 21: Welle
- 22: Buchse
- 23: Beblechung
- 24: Ring
- 25: Nuten
- 26: Bohrungen

## Patentansprüche

1. Dampfturbine mit mindestens einem Magnetlager für die Welle, wobei im Bereich eines Magnetlagers auf der Welle eine Beblechung aufgebracht ist,
**dadurch gekennzeichnet,**
**dass** in Längsrichtung der Welle verlaufende Kühlluftkanäle (9,25,26) für eine zuzuführende Kühlluft zwischen dem Magnetlager (6) und der Welle ausgebildet sind, wobei die Kühlluftkanäle auf der der Beschaufelung zugewandeten Seite des Magnetlagers mit einer radial verlaufende Kühlluft-Zuführungen aufweisenden Kühlluft-Zuführungseinrichtung (8) verbunden sind und am freien Ende des Wellenendes im Lagergehäuse enden.

2. Dampfturbine nach Anspruch 1,
**dadurch gekennzeichnet,**
**dass** die Welle in dem Bereich, in welchem die Beblechung (7) aufgebracht ist, axial verlaufende Nuten (9) aufweist, welche mit der auf der Welle aufliegenden Beblechung die Kühlkanäle bilden.

3. Dampfturbine nach Anspruch 1,
**dadurch gekennzeichnet,**
**dass** im Bereich der Magnetlager auf die Welle Buchsen (22) aufgebracht sind, welche die Beblechung (23) tragen, wobei die Buchseninnenseiten Nuten (25) aufweisen, welche mit der Wellenoberfläche die Kühlkanäle bilden.

4. Dampfturbine nach Anspruch 1,
**dadurch gekennzeichnet,**
**dass** im Bereich der Magnetlager auf die Welle Buchsen (22) aufgebracht sind, welche die Beblechung (23) tragen, wobei Bohrungen (26) in den Buchsen die Luftkanäle bilden.

5. Dampfturbine nach einem der vorhergehenden Ansprüche,
**dadurch gekennzeichnet,**
**dass** die Welle dreigeteilt ist und aus einem die Beschaufelung tragenden Mittelstück und zwei angeschraubten Wellenenden besteht, und
**dass** von der Kühlluft-Zuführungseinrichtung weitere Kühlkanäle abzweigen, welche über radiale und axiale Bohrungen im peripheren Bereich des Wellenendes zum dem Mittelstück der Welle benachbarten Ende des angeschraubten Wellenendes führen, wo eine Kammer zwischen dem Ende der eigentlichen Welle und dem angeschraubten Wellenende ausgebildet ist, und von dort über eine mittige axiale Bohrung zum freien Ende des angeschraubten Wellenendes führen.

## Claims

1. Steam turbine with at least one magnetic bearing for the shaft, with metal panelling being attached to the shaft in the area of a magnetic bearing,
**characterised in that**
cooling air ducts (9, 25, 26) running in the longitudinal direction of the shaft are embodied between the magnetic bearing (6) and the shaft for cooling air to be supplied, with the cooling air ducts being connected on the side of the magnetic bearing facing towards the blading to a cooling air supply device (8) featuring a cooling air supply running radially and ending at the free end of the shaft end in the bearing housing.

2. Steam turbine according to claim 1,
**characterised in that**
the shaft features grooves (9) running axially in the area in which the metal panelling (7) is attached, which form the cooling ducts along with the metal panelling lying on the shaft.

3. Steam turbine according to claim 1,
**characterised in that,**
collars (22) are attached to the shaft in the area of the magnetic bearing which carry the metal panelling (23), with the inner sides of the collars having grooves (25) which form the cooling ducts together with the shaft surface.

4. Steam turbine according to claim 1,
**characterised in that,**
collars (22) are attached to the shaft in the area of the magnetic bearing which carry the metal panelling (23), with holes (26) in the collars forming the air ducts.

5. Steam turbine according to one of the previous claims,
**characterised in that**,
the shaft is divided into three parts and consists of a central piece carrying the blading and two screwed-on shaft ends, and that
further cooling air ducts branch off from the cooling air supply device which lead via radial and axial holes in the peripheral area of the shaft end to the end of the screwed-on shaft end adjoining the central piece of the shaft, where a chamber is embodied between the end of the actual shaft and the screwed-on shaft end, and from there via a central axial hole to the free end of the screwed-on shaft end.

## Revendications

1. Turbine à vapeur comprenant au moins un palier magnétique pour l'arbre, dans laquelle un revêtement en tôle est appliqué sur l'arbre dans la région d'un palier magnétique,
**caractérisée**
**en ce que** des canaux d'air de refroidissement (9, 25, 26) s'étendant dans le sens longitudinal de l'arbre pour amener de l'air de refroidissement sont réalisées entre le palier magnétique (6) et l'arbre, lesquelles canalisations d'air de refroidissement sont reliées sur le côte orienté vers l'aubage du palier magnétique à un dispositif d'amenée d'air de refroidissement (8) qui présente des conduites d'amenée d'air de refroidissement s'étendant radialement, et débouchent à l'extrémité libre du bout d'arbre dans le logement du palier.

2. Turbine à vapeur selon la revendication 1,
**caractérisée**
**en ce que** l'arbre présente dans la région, dans laquelle est appliqué le revêtement en tôle (7), des rainures (9) s'étendant axialement, lesquelles forment avec le revêtement en tôle appliqué sur l'arbre les canaux de refroidissement.

3. Turbine à vapeur selon la revendication 1,
**caractérisée**
**en ce que** dans la région des paliers magnétiques, des coussinets (22) portant le revêtement en tôle (23) sont placés sur l'arbre, les faces internes des coussinets présentant des rainures (25) lesquelles forment avec la surface de l'arbre les canaux de refroidissement.

4. Turbine à vapeur selon la revendication 1,
**caractérisée**
**en ce que** dans la région des paliers magnétiques, des coussinets (22) portant le revêtement en tôle (23) sont placés sur l'arbre, des alésages (26) réalisés dans les coussinets formant les canaux de refroidissement.

5. Turbine à vapeur selon l'une des revendications précédentes,
**caractérisée**
**en ce que** l'arbre est en trois parties et est composé d'une pièce du milieu portant l'aubage et de deux bouts d'arbre vissés, et
**en ce que** d'autres canaux de refroidissement partent du dispositif d'amenée d'air de refroidissement, lesquels mènent via des alésages radiaux et axiaux réalisés dans la partie périphérique du bout d'arbre à l'extrémité du bout d'arbre vissé voisine de la pièce centrale de l'arbre, où une chambre est ménagée entre l'extrémité de l'arbre proprement dit et le bout d'arbre vissé, et de là via un alésage axial central à l'extrémité libre du bout d'arbre vissé.
